# EUROPEAN PATENT SPECIFICATION

(11) **EP 1 169 872 B1**
(45) Date of publication and mention of the grant of the patent: **30.07.2008**
(21) Application number: 00918917.6
(22) Date of filing: 14.04.2000
(51) Int. Cl.: H04Q 7/22, H04Q 7/32

(54) **MANAGING SERVICE COMPONENTS OF MOBILE TERMINAL**
VERWALTUNG VON DIENSTKOMPONENTEN EINES MOBILEN ENDGERÄTES
GESTION D'ELEMENTS DE SERVICE DANS UN TERMINAL MOBILE

(30) Priority: 15.04.1999 FI 990844
(43) Date of publication of application: 09.01.2002
(73) Proprietor: Nokia Corporation, 02150 Espoo (FI)
(72) Inventor: USKELA, Sami, FIN-00250 Helsinki (FI)
(74) Representative: Äkräs, Tapio Juhani
(86) International application number: PCT/FI2000/000321
(87) International publication number: WO 2000/064202

(56) References cited:
- EP-A1- 0 562 890
- EP-A2- 0 836 340
- WO-A1-94/30023
- WO-A1-97/29606
- WO-A2-99/63767
- FR-A1- 2 761 219

## Description

### BACKGROUND OF THE INVENTION

The invention relates to managing services subscribed to by a subscriber who uses different mobile terminals. The invention relates especially to management of service components.

Mobile systems have been developed to enable people to move away from fixed telephone terminals while still being accessible. Services that are provided via mobile terminals in the mobile systems have developed at the same time with the systems themselves. Several novel forms of service are under development for both present and especially future, third-generation mobile systems, such as the Universal Mobile Telecommunication System (UMTS) and the International Mobile Telecommunication 2000 (IMT-2000). The UMTS is being standardized by the ETSI (European Telecommunications Standards Institute), whereas the ITU (international Telecommunications Union) standardizes the IMT-2000 system. These future systems are basically very similar.

WO 97/29606 discloses a solution in which a program data controlling a second element is chosen in a first element during a connection establishment between the first and second elements, said program data relating to one or more modes of operation to be used for communication on the connection between the elements. According to WO 97/29606, the first element sends a suggestion of a program data, and if the second element does not comprise the suggested program data and is able to receive it, the first element sends the program data to the second element.

Mobile systems produce wireless data transmission services. Third-generation mobile systems are expected to fulfil a great variety of different future service needs, such as virtual home environment (VHE). It is even difficult to now predict many of the services that will be needed in the future. Furthermore, services will become more and more complicated and they will be implemented to a greater extent by means of different service components. A service component can be a part of a program, which means that the actual desired functionality (or program) is composed from several service components. On the other hand, a single service component may be sufficient to provide the desired functionality, in which case the program implementing the service consists of only one service component. Service components used to provide a service can be situated in a mobile terminal, in the network and/or in a smart card that is usually located in the mobile terminal and used to identify the subscriber.

Users will most likely change the mobile terminals they use every now and then. Mobile terminals may even be changed on a regular basis. For example, in meetings with customers a user employs a mobile terminal that supports versatile data processing, whereas in his office he may use a more simple mobile terminal. When a user starts using a new mobile terminal, he should have access to at least certain services which he has indicated to be of primary importance.

A problem with the arrangement described above is that a new mobile terminal does not necessarily have the service components required for the services. It is not reasonable to require a user to know himself which service components his old mobile terminal had and which components the new terminal has, and to expect him to load the missing service components on the basis of such knowledge.

### BRIEF DESCRIPTION OF THE INVENTION

It is an object of the invention to provide a method and equipment implementing the method so as to solve the aforementioned problem. The objects of the invention are achieved by means of a method, a system, a network element and a mobile terminal which are characterized by what is disclosed in the independent claims. The preferred embodiments of the invention are disclosed in the dependent claims.

The invention is based on comparing service components provided in a mobile terminal with service components required for services a subscriber has subscribed to. If a service component is missing from the mobile terminal, a procedure is activated for loading the component in question.

An advantage of the invention is that the user does not have to know or remember the required service components, nor does he have to check which service components are already provided in the mobile terminal. The system compares the service components provided in the mobile terminal with the components required in the terminal, and even if only one component is missing, a loading procedure is activated.

In a preferred embodiment of the invention, a mobile terminal user is shown alternative manners of loading a service component. This provides the advantage that the user can affect the loading of the components. For example, he can decide whether he wants a particular service regardless of its price, or whether he wishes to load it later on.

In a preferred embodiment of the invention, one or more conditions are determined for the loading procedure, and the manner of loading can be selected on the basis thereof. The advantage is that the user (or the operator of the user) has to set the conditions related to the loading manner only once. Thereafter, whenever the mobile terminal is changed, the conditions guide the loading of the missing service components so that the user only has to participate in the loading at a minimum level he has determined himself.

In a preferred embodiment of the invention, service components related to services the user has indicated to be of primary importance are always loaded substantially immediately. The advantage this provides is that the user has access to all the important services in all the mobile terminals without any effort being required from the user, whereas the user can control the loading of less important services, if he so desires.

### BRIEF DESCRIPTION OF THE FIGURES

The invention will be described below in more detail by means of preferred embodiments with reference to the accompanying drawings, in which
Figure 1 illustrates the UMTS network architecture;
Figures 2A, 2B and 2C show operation according to a first preferred embodiment of the invention in a mobile station;
Figures 3 and 4 show operation according to the first preferred embodiment of the invention in the network;
Figure 5 shows signalling according to a second preferred embodiment of the invention; and
Figure 6 shows an example of selecting a loading manner according to the loading procedure.

### DETAILED DESCRIPTION OF THE INVENTION

The present invention can be applied in connection with any data transmission system where a subscriber can change the mobile terminal and where service components required to provide services can be loaded into the terminal. Such mobile terminals will be available for example in the next generation of the pan-European mobile system GSM (Global System for Mobile Communication), i.e. GSM 2+. The invention will be described below by using as an example the UMTS, without restricting the invention to such a system, however. Specifications of mobile systems in general and of the IMT-2000 and the UMTS in particular develop rapidly. Such development can require additional changes to be made to the invention. Therefore all the words and expressions should be interpreted broadly and they are only intended to illustrate and not to restrict the invention. What is essential for the invention is the function itself and not the network element or the device in which the function is implemented.

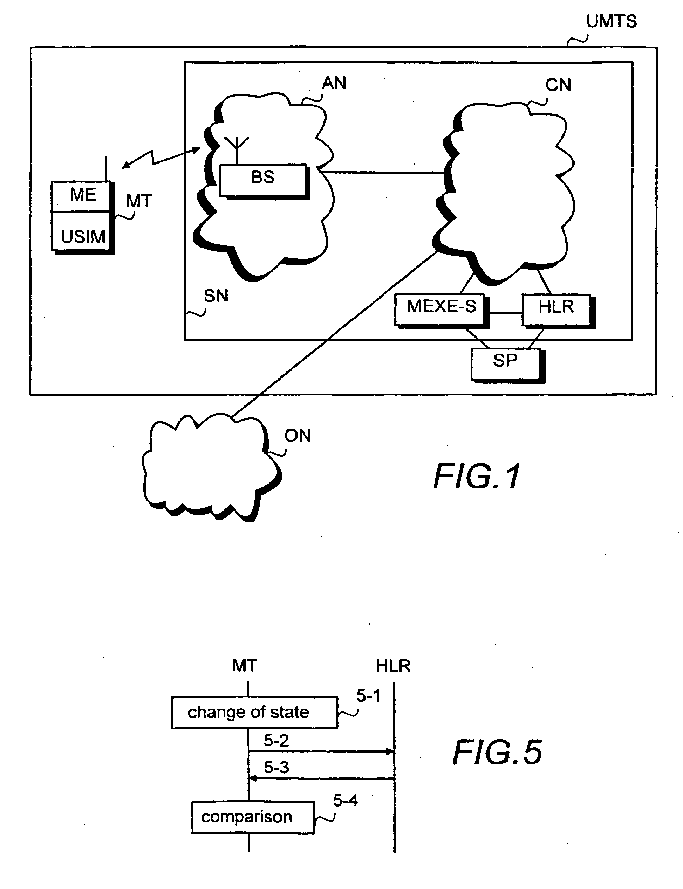

Figure 1 shows the UMTS network architecture generally, since a more detailed structure of the network is not essential to the invention. In third-generation mobile networks a service provider SP and a network operator are separate from one another. The SP produces services to an end user via a network SN of one or more network operators. Such a network that forwards services is called a serving network SN. The service provider can provide a service via a serving network SN of one or more network operators. Furthermore, the SP can change the serving network in the middle of the service without the user noticing the change. The service provider can also operate as the network operator.

The serving network SN comprises an actual access network AN and one or more core networks CN. As shown in the figure, according to present knowledge the access network comprises base stations BS and radio network controllers RNC controlling the base stations. The RNCs are not shown in Figure 1. The access network AN mainly manages functions rotated to the radio path, i.e. it provides the core network with radio access required for wireless communication. The core network CN is either a conventional telecommunication network or a future network modified to efficiently utilize the access network in wireless communication. The core network CN provides a connection to other systems or networks ON, which include other UMTS networks, data networks and a public switched telephone network. According to present knowledge, AN services are provided from core networks CN.

In the third-generation mobile networks the subscriber and the user are also separated. The subscriber provides the user with access right to the subscribed services by giving the user an identification card (IC Card), such as a USIM (User and Services and Identity Module). The user gains access to the services by means of a mobile terminal MT, which communicates with the serving network SN over the ratio path via the base stations BS. The subscriber and the user can be one and the same. In this application, it is assumed for the sake of simplicity that the user is also the subscriber.

The mobile terminal MT consists of an actual mobile equipment ME and an identification card USIM, which is detachably connected to the ME and also called a subscriber identification module. In this application, the mobile terminal MT refers generally to a combination of the subscriber identification module and the actual mobile equipment. The subscriber identification module USIM is a smart card, which can be detached from the mobile terminal and which is used by the user to operate the card-controlled mobile equipment. The user is identified on the basis of the card supplied to the mobile equipment and not on the basis of the equipment itself.

According to present knowledge, the USIM is a multipurpose card, which supports mobile system applications and other applications, such as Java applications and applications needed in the health care system. A subscriber can subscribe to services of several different service provides to the same subscriber identification module USIM. Furthermore, according to present knowledge the subscriber may use several different service profiles with the same USIM. The minimum number of service profiles is one. The subscriber identification module USIM stores an international mobile subscriber identity IMSI, on the basis of which the subscriber can be identified unambiguously and which can also be used to identify the user. Depending on the embodiment of the invention, the USIM can keep a list of the subscribed services with their service components, or a mere list of the components. In such a case the USIM contains data about an identifier identifying the service component and about the component version. The USIM preferably supplements the data of each service component or service with an address and the loading manner to be used, i.e. instructions on how to load the service component.

The actual mobile equipment ME can be a simplified device that only transmits speech, or it can be a device which transmits various services and may comprise a service logic execution environment T-SCF for an intelligent network service, which corresponds to a service control function on the network side. The mobile equipment ME can be any device that is able to communicate in a mobile system, or a combination of several devices, such as a multimedia computer which is connected for example to a card phone manufactured by Nokia in order to provide a mobile connection. Depending on the embodiment of the invention, the ME can either be arranged to transmit data required by the functionality according to the invention between the USIM and the network, or the ME performs itself the functionality of the mobile terminal according to the invention and requests data from the USIM and/or the network.

In the example shown in Figure 1, a home location register HLR is placed in a serving network SN. According to present knowledge, the HLR comprises not only the home location register data of the core network but also the subscriber and service data required in the UMTS. The subscriber service data is maintained separately for each service profile, which comprises information about the subscribed telecommunication services of the profile. Telecommunication services include different basic services and supplementary services. The HLR preferably maintains data at least on the service components that are required in a mobile terminal to provide a subscribed service. The data is maintained so that each service component can be specified with an accuracy sufficient to load the component into the mobile terminal, if required. Furthermore, the home location register preferably also comprises data about the version number of each service component. Depending on the embodiment, the service components needed in the mobile terminal comprise either the components required in the actual mobile equipment ME or the components required by the combination of the USIM and the ME. According to present knowledge, this data regarding the services is maintained by each service provider SP.

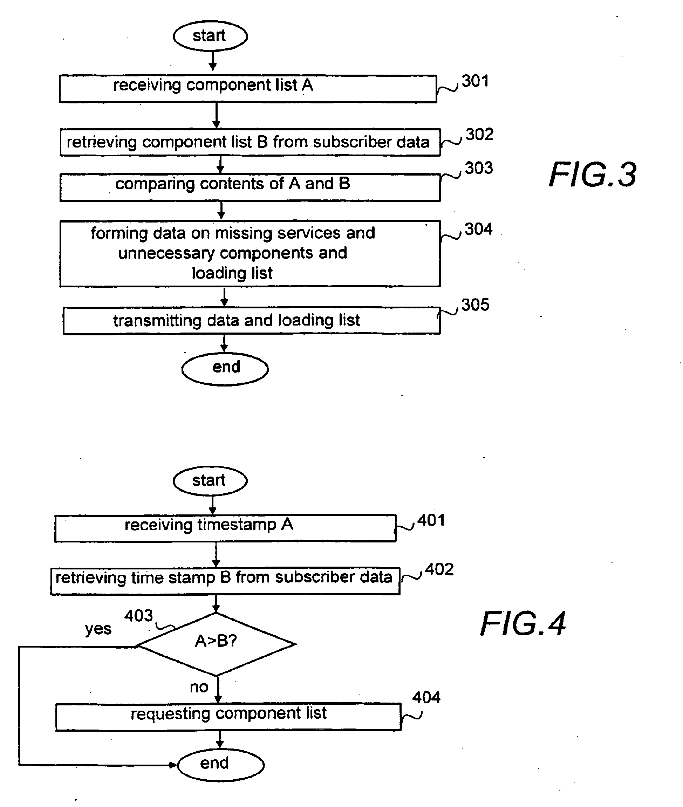

The example of Figure 1 shows a new network element MEXE-S, which is placed in the serving network SN. MEXE-S is an element comprising the mobile station application execution environment MExE. It can be an intelligent network service control point SCP, a home location register HLR or some other server. In the first preferred embodiment of the invention, MEXE-S is arranged to perform the functions described in connection with Figures 3 and 4.

In addition to means required in the realization of prior art services, a system implementing the functionality according to the present invention comprises means for comparing the service components provided in the mobile terminal with the components required for the services subscribed to by the subscriber using the mobile terminal, and means for loading the missing components into the mobile terminal.

As described above, the management of the service components according to the invention requires relatively small changes in the present network elements and mobile terminals. The changes can be implemented in the form of updated software routines and/or by means of ASICs. More memory may also be required.

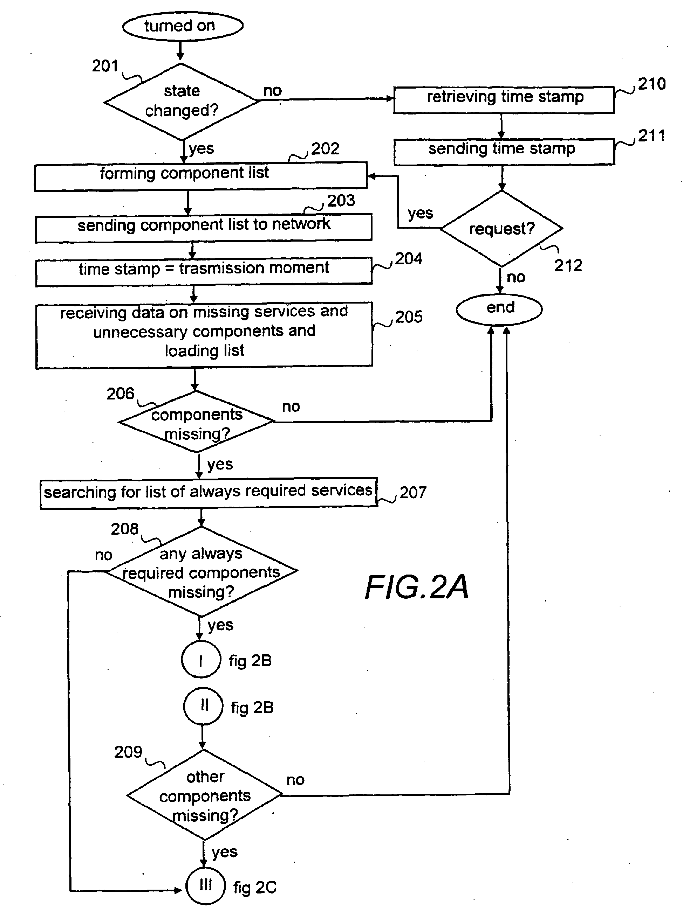

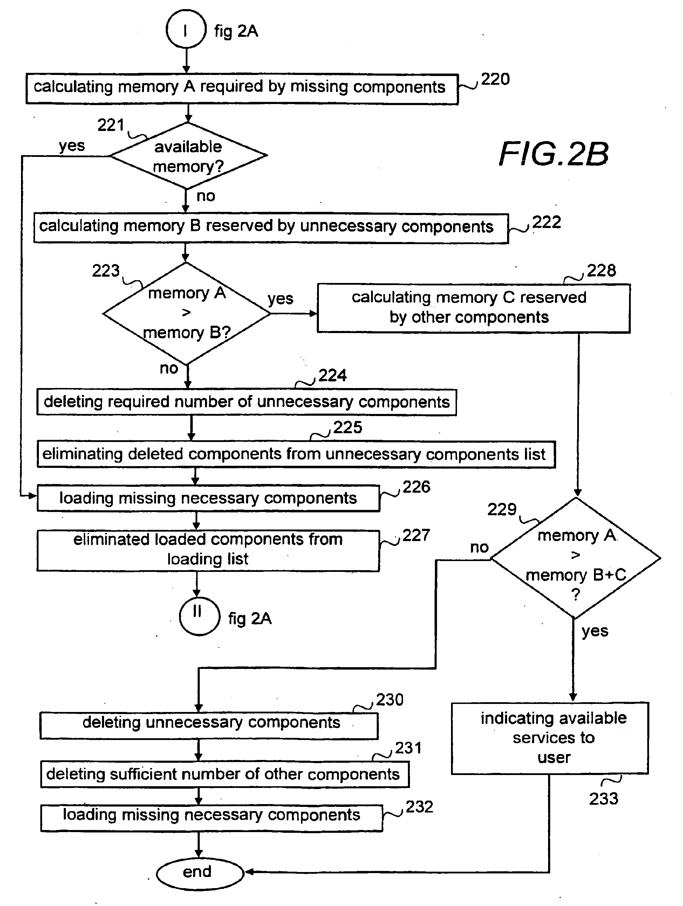

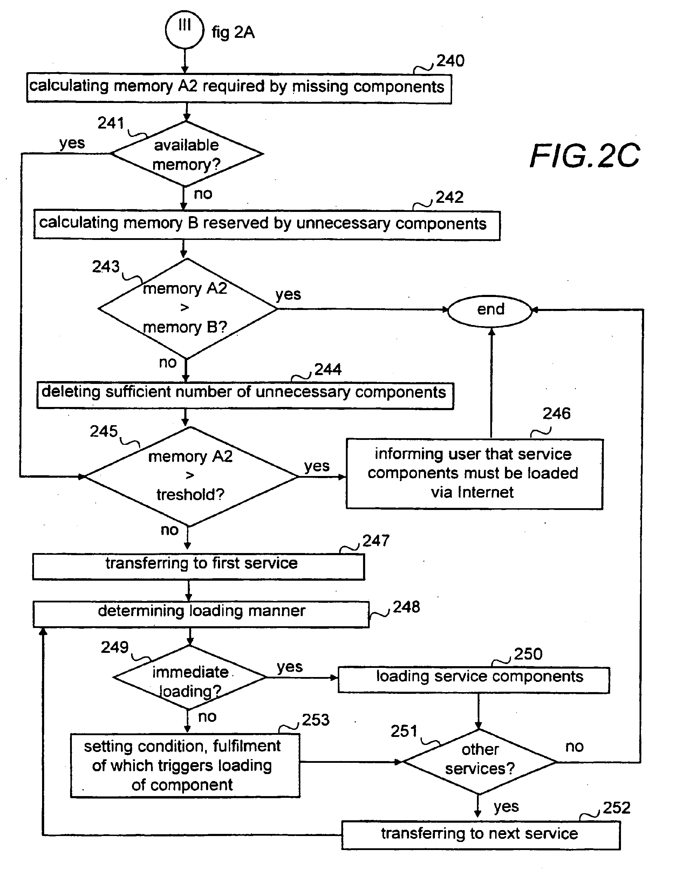

Figures 2A, 2B and 2C show the functionality of a mobile terminal and Figures 3 and 4 show the functionality of the network in the first preferred embodiment of the invention where service components of a mobile terminal refer to the components of the actual mobile equipment ME. In the first preferred embodiment the functionality related to the management of the service components is decentralized in the following manner:
- Each service component has a specific identifier and a version number
- The actual mobile equipment forms a list of the service components in its memory, comprising the name and version number of each component. It also loads service components, deletes them from the memory and monitors the use of the service components.
- The USIM maintains data about the user preferences, such as the priority of services, service components of a service, and the loading manner of service components related to a service. It is assumed by way of example that the services are classified into two different priority levels: services that are always required, and other services. Services that are always required include services provided in each subscriber profile. In addition, the subscriber may mark some services from each service profile in the class of services that are always required.
- The network maintains data about the subscribed services and about the services that are active in each service profile. Furthermore, the network maintains data about the service components required for each service, it estimates the time it takes to load a service component and the resulting costs, and allows components to be loaded via the Internet for example over a wireless connection using Bluetooth or IRDA (Infrared Data). A fixed connection, such as a serial cord, can also be used.

In the first preferred embodiment of the invention, it is assumed that missing service components related to the services that the user has indicated to be of primary importance or that are always required are loaded substantially immediately, whereas the manner of loading service components related to other services can vary. 'Substantially immediately' means that the loading is not delayed on purpose but it is executed as soon as it is suitable for the process. For the sake of clarity, it is further assumed that a single service component is so small that the loading thereof via the Internet will not be described separately. It is also assumed in the first preferred embodiment of the invention that the functions described in connection with Figures 2A, 2B, 2C, 3 and 4 are carried out when registering into the network. The data that must be exchanged is transmitted for example in LocationUpdate messages. It is also possible to determine dedicated signalling messages for the data exchange.

With reference to Figure 2, an inactive mobile terminal is switched on. As a result, when the mobile terminal registers with the network, it is checked in step 201 whether the state of the terminal has changed. The state of the mobile terminal can change for example if the USIM provided in the terminal has changed or if more memory has been loaded into the actual mobile equipment. The change of the USIM can be observed either in the mobile terminal or on the network side for example in connection with the authentication of the subscriber and/or the mobile terminal..

If it is detected in step 201 that the state has changed, a list of the service components provided in the actual mobile equipment is formed in step 202. The list is formed by collecting the names and version numbers of the service components in the memory. When the list of components is complete, it is transmitted to the network in step 203. The moment of transmission is thereafter stored as the time stamp of the latest update in step 204.

In step 205, data about the missing services and unnecessary components, and the loading list are received from the network. Data about the missing services indicates the services which cannot be used because a service component required for implementing the service is not provided in the mobile terminal. Unnecessary components indicate the service components in the mobile terminal which are not used in any service subscribed to by the subscriber. In some other embodiments unnecessary components may also comprise the service components which are related to the services of non-active service profiles ordered by the subscriber. In the first preferred embodiment, the loading list comprises the service components that must be loaded into the mobile terminal to provide the missing services. The loading list preferably also comprises an address or addresses from which the service components are loaded and the amount of memory each service component requires. Alternatively, the loading address(es) may be stored on the USIM. In embodiments where each service consists of a single service component, a separate loading list is not necessarily needed. In embodiments where there are no loading instructions stored on the USIM, the loading list preferably comprises instructions for loading each service component. Furthermore, in the first preferred embodiment the loading list preferably comprises an estimate of the time it takes to load each component, and of the costs of the loading, at least when the subscriber is not located in the area of his home network.

In step 206, it is checked whether one or more service components are missing from the mobile terminal. If there is no data about missing services (and the loading list is empty), registration into the network is continued normally in the first preferred embodiment. If one or more service components are missing from the mobile terminal, a loading procedure, i.e. selection of loading manners, is activated. In the first preferred embodiment the selection of the loading manner is activated by searching, in step 207, the USIM for the list of the service components of services that are always required. It is thereafter checked in step 208 whether any of the service components that are always required are missing. This is performed by comparing the service components on the loading list with the list of the service components that are always required. If there are no missing service components of the services that are always required, the process moves to step III in Figure 2C. If such components are missing, the process moves to step I in Figure 2B, from which the process possibly returns via step II to step 209, where it is checked whether any other components are missing, i.e. whether the loading list comprises service components of services other than those that are always required. If not, the process continues normally. If it does comprise other components, the process moves to step III in Figure 2C.

If it is detected in step 201 that the state has not changed, the value of the time stamp is retrieved in step 210 and transmitted to the network in step 211. It is thereafter checked in step 212 whether a request for loading components has been received from the network. If the network has transmitted such a request, the process moves to step 202 to form a component list. If no request has been transmitted, the registration process continues normally.

In some other embodiments the mobile terminal always forms a list of the components and transmits it to the network in connection with registration. It is also possible that the mobile terminal forms a component list and transmits it to the network only upon receiving a request from the network.

In some embodiments of the invention, a loading list and data about the service components comprised by the subscribed services can be received in step 205. In such a case the mobile terminal can locate unnecessary service components by comparing the data about the service components included in the subscribed services with the list of components formed in step 202.

In Figure 2B, the process starts from step I of Figure 2. This step was reached after it was detected in step 208 of Figure 2A that service components of the services that are always required are missing from the mobile terminal. Step 220 comprises calculating the memory A needed by the missing service components that are always required. In step 221 it is thereafter checked whether the mobile terminal comprises a sufficient amount of available memory. If the available memory is sufficient, the missing required service components are loaded in step 226, and in step 227 they are eliminated from the loading list, whereafter the process moves to step II of Figure 2. The components are eliminated from the list because one and the same service component can also be related to some other service, wherefore it could be loaded twice. Furthermore, eliminating components from the loading list after they have been loaded makes it easier to keep track of which service components have already been loaded and which will be loaded later.

If there is not enough memory in step 221, the memory B reserved by the unnecessary service components is calculated in step 222, whereafter it is checked in step 223 whether memory A is greater than memory B. If not, a sufficient number of unnecessary service components are deleted from the memory of the mobile terminal in step 224 so that the missing service components that are always needed can be loaded. The mobile terminal can select the service components to be deleted for example by monitoring the use of the components and by deleting the components that have been used the least. It is also possible to ask the mobile terminal user to indicate which service components should be deleted and in which order. When a minimum number of unnecessary service components are deleted, it is possible to diminish the loading of service components for example from the network into a collective phone of a work group, where the user changes often but the same users rotate. At the same time when unnecessary service components are deleted in step 224, these deleted service components are removed from the list of unnecessary service components in step 225. The process thereafter proceeds to step 226, where the missing unnecessary service components are loaded as described above.

If it is detected in step 223 that the memory A required by the missing service components that are always required is greater than the memory B needed by the unnecessary service components, the process moves to step 228, which comprises calculating the memory C reserved by the service components in the memory of the mobile terminal which are only related to other services. It is thereafter checked in step 229 whether memory A is greater than memories B and C together. If it is, the available services are indicated to the mobile terminal user in step 233 of the first preferred embodiment, whereafter the registration is continued normally. Missing service components are therefore not loaded since there is not enough memory.

If it is detected in step 229 that memory A is not greater than memories B and C together, the unnecessary service components are deleted from the memory of the mobile terminal in step 230, and a required number of service components of the other services are thereafter deleted in step 231 in order to load into the mobile terminal the service components that are always required. When a sufficient amount of memory has been released, the missing necessary service components are loaded into the mobile terminal in step 232. The registration is thereafter continued normally.

In Figure 2C, the process starts from step III of Figure 2. This step was reached after it was detected in step 208 of Figure 2A that no service components of the services that are always required are missing from the mobile terminal, or after it was detected in step 209 that service components of other services are also missing from the mobile terminal. Step 240 comprises calculating the memory A2 required by the missing service components of the other services. This is implemented in the first preferred embodiment by calculating the memory required by the service components on the loading list. It is thereafter checked in step 241 whether the mobile terminal has a sufficient amount of memory available. If not, the memory B reserved by the unnecessary service components is calculated in step 242, whereafter it is checked in step 243 whether memory A2 is greater than memory B. If not, a sufficient number of unnecessary service components are deleted from the memory of the mobile terminal in step 244 so as to enable loading of the missing service components. It is then checked in step 245 whether memory A2 exceeds a predetermined threshold value. The threshold value can be used to control the loading efficiency. The loading of a large number of service components via the mobile system is expensive, wherefore it is preferable to load them for example via the Internet. If the threshold value is exceeded, the user is informed in step 246 that the service components must be loaded via the Internet. Registration is thereafter continued. In some other embodiment it is possible to ask the user whether he wants to load the service components via the Internet.

If it is detected in step 245 that the threshold value is not exceeded, the process moves to the first missing service in step 247, and the manner of loading is determined in step 248. In the first preferred embodiment, it is checked in step 249 whether the manner of loading requires immediate action. If so, the missing service components of the service in question are loaded into the mobile terminal in step 250, whereafter it is checked in step 251 whether there are any other missing services the components of which should be loaded. If there are, the process moves to the next service in step 252, and the loading manner of the service is determined in step 248. The process thereafter continues as described above.

If all the missing service components have been loaded and there are no other services (step 251), registration is continued.

If it is detected in step 249 that the loading manner does not require immediate action, a condition is set in step 253, the fulfilment of the condition triggering the loading of the service component(s). Operation is thereafter continued in step 251 as described above by checking whether there are other services. The condition set in step 253 can for example state that the service components are loaded when the terminal arrives at a cheaper area, such as the area of the home network, or at an area supporting general packet radio service GPRS. The condition can also state that the service component/s is/are only loaded when the service is activated. For example, if a service or a part thereof is based on a mobile station browser utilizing for example Wireless Markup Language (WML) and it is dependent on the user interface control, the missing service component does not have to be loaded in advance when the mobile equipment ME is changed, but the service logic can be loaded only when the user interface for the service is activated.

If it is detected in step 243 that memory A2 is greater than the releasable memory, registration is continued in the first preferred embodiment. In some other embodiments, it is possible to activate a more detailed search through the services to see which of the other missing services can be provided in the mobile terminal.

If it is detected in step 241 that the mobile terminal has a sufficient amount of memory available, the process moves directly to step 245 to check whether the threshold value is exceeded.

In some other embodiments the threshold value can be obtained from the network together with the loading list. The threshold value can also consist of the estimated price and/or duration of the loading.

In some other embodiments, all or some of the service components to be loaded later can be placed in a loading queue on the network side. In the same connection, a condition is set in the network, and the fulfilment of the condition triggers the loading of the components into the mobile terminal. In such a case the components to be loaded later do not have to be included in the loading list.

In Figure 3 the process starts from step 301, where the network receives a component list A from the mobile terminal. In response to the reception of the component list, a component list B containing data about the service components required in the mobile terminal is retrieved from the subscriber data in step 302. The subscriber data is preferably located in the home location register HLR. In step 303, the service components on list A are compared with the components on list B, whereafter a loading list and data about the missing services and unnecessary components are formed in step 304. These were described in greater detail in connection with Figure 2. If it is detected during the comparison that the version of a service component on list A is older than the version of the same component on list B, the service component is preferably included in the loading list. After step 304 has been terminated, the data and the loading list are transmitted in step 305. If nothing was missing, an empty data field and an empty loading list are transmitted. Registration is thereafter continued normally.

In Figure 4 the process starts from step 401, where the network receives a time stamp A from the mobile terminal. The time stamp indicates the moment when the mobile terminal performed the latest update. In response to the reception of the time stamp, a time stamp B is retrieved from the subscriber data in step 402. In the first preferred embodiment of the invention it is assumed that the subscriber data of the home location register comprises the time stamp B of the most recent service component maintained by the service provider(s). Whenever a newer version of a subscriber service component arrives, the date of the version is updated as the time stamp B of the most recent service component. This procedure ensures that the mobile terminal always comprises up-to-date services.

In step 403 it is checked whether time stamp A is greater than time stamp B. If A is greater than B, the mobile terminal comprises the latest versions of the service components, which do not have to be updated, wherefore registration can be continued normally.

If A is smaller than B, a service component version has been updated. Therefore, the mobile terminal is requested in step 404 to transmit a component list. The process is thereafter on hold until the component list is received. Meanwhile, the functions shown in Figure 3 are performed.

In some other embodiments it is possible to check, instead of the time stamp B, whether a predetermined time has passed since the previous check. If so, a request to transmit the component list is sent to the mobile terminal.

Figure 5 shows a signalling chart in a second preferred embodiment of the invention, where it is assumed that the mobile terminal also carries out the comparison shown in Figure 3, and where the service components of each subscriber profile are compared separately. A change of state is detected in step 5-1 for example due to the reasons described in connection with Figure 2, or since the subscriber profile changes or the network indicates the change of state for example due to an updated service component. As a result, the mobile terminal MT sends to the HLR a message 5-2 requesting for service components. The message preferably indicates the subscriber profile that is being used. The HLR transmits data about the service components related to the subscriber profile services that should be provided in the mobile terminal in a message 5-3. After the mobile terminal has received the message, it compares in step 5-4 the service components in its memory with the service components contained in the message 5-3. If all the service components of the message 5-3 are already in the mobile terminal, no other functions are carried out. On the other hand, if even one service component mentioned in the message 5-3 is missing, in the second preferred embodiment the mobile terminal MT activates a loading procedure by asking the user of the terminal whether the service component should be loaded. If the user gives his permission, the service component is loaded. This is repeated for all the missing service components in the second preferred embodiment.

In a preferred embodiment of the invention, the exchange of data shown in Figure 5 can take place between the actual mobile equipment ME and the USIM. In such a case all the necessary data about the services the subscriber has subscribed to is stored in the USIM.

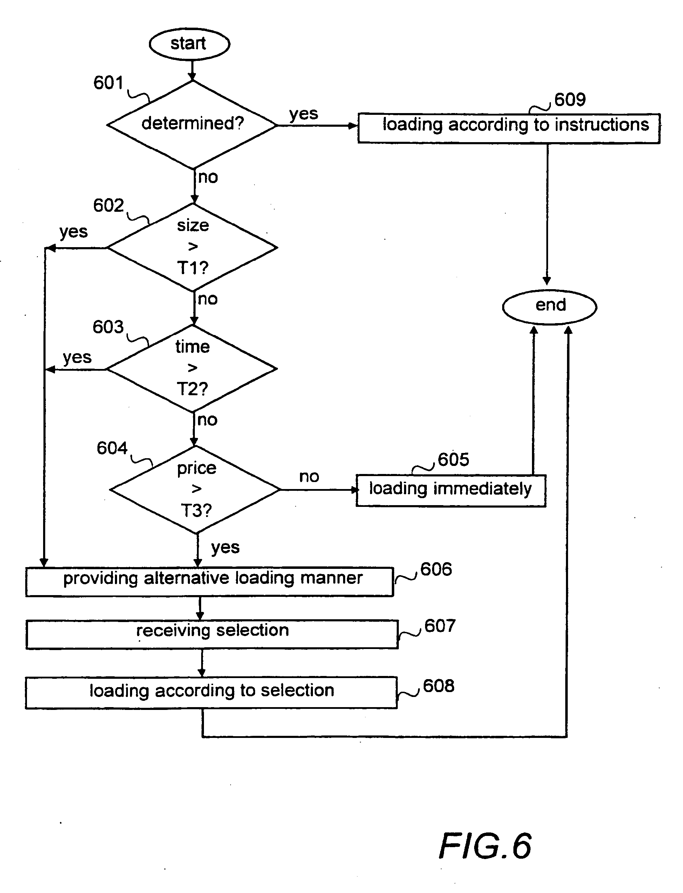

Figure 6 shows an example of selecting the loading manner included in the loading procedure by means of different conditions. For the sake of clarity, it is assumed in the example of Figure 6 that a service comprises only one service component. It is also assumed that threshold values are determined in advance and that they are the same for all the services. The loading manner is selected specifically for each service in the example shown in Figure 6. The process starts from step 601, where it is checked whether loading instructions are determined for a service component. Loading instructions can be defined in advance for example on the USIM in connection with the service, or they can be attached to the loading list or the list of the service components obtained from the network. (In case of service-specific threshold values, the same process is possible for the different values.) If no loading instructions have been determined, it is checked in step 602 whether the size of the service component is greater than a predetermined threshold value T1. If the size does not exceed the threshold value, it is checked in step 603 whether the estimated duration of loading the service component exceeds a predetermined threshold value T2. If even the duration does not exceed the threshold value, it is checked in step 604 whether the price estimated for loading the service component exceeds a predetermined threshold value T3. If the price does not exceed the threshold value, either, the service component is loaded substantially immediately into the mobile terminal in step 605.

Even if only one threshold value is exceeded (steps 602, 603, 604), in step 606 the user of the mobile terminal is provided with at least one alternative loading manner via the user interface of the mobile terminal. It is possible to ask the user for example whether he wants to start using service X immediately if the immediate loading costs FIM Y and takes Z seconds, or whether he wants service X to be introduced only in the home cell where the loading costs FIM Y' and takes Z' seconds. More than one alternative can also be provided. The loading manners to be provided can also depend on the condition in the step which preceded step 606. For example when the condition in the step preceding step 606 related to the size of the component, the alternatives are immediate loading or loading via the Internet. On the other hand, in the case of the conditions related to time and price, the alternatives are immediate loading or loading for example only in the home cell. In step 607 the choice made by the user, i.e. information about the loading manner the user wants to be used, is received. Thereafter the service component is loaded according to the user's choice in step 608. The service component is usually loaded either substantially immediately, via the Internet or when the fulfilment of the condition set for the loading (for example arrival at the home cell) triggers the loading.

If loading instructions have been determined for the service component (step 601), the component is loaded according to the instructions in step 609.

Predetermined loading instructions and different conditions with threshold values can be used to provide a loading procedure that takes into account the user's needs as well as possible. By means of such a loading procedure the missing service components are loaded into the mobile terminal such that the user is requested to provide loading instructions by selecting one of different alternatives only when the user himself wants to participate.

The order of the steps shown in Figures 2A, 2B, 2C, 3, 4, 5, and 6 can vary from the one described above and the steps can also be carried out in parallel. Other steps not shown in the figures can also be performed between the aforementioned steps. Some of the steps shown in the figures can also be eliminated or replaced with other steps, as long as the service components provided in the mobile terminal are compared with the service components required in the terminal, and the loading procedure of the missing components is activated. For example, deletion from the memory can be replaced with overwriting. Furthermore, the aforementioned embodiments or parts thereof can be combined. The loading procedures described above are only examples, and the invention is not restricted thereto in any way. The loading procedure can also be activated from the network, in which case the mobile terminal only has to forward identification data about the terminal and the subscriber, and to participate in the actual loading, since data about the properties of the actual equipment can also be stored in the network. The services can be prioritized, and the loading procedure of each service can comprise requesting for instructions from the user of the mobile terminal. Different conditions can also be set freely, and related threshold values can either be determined in advance, or each threshold value can be defined separately during the process. The number of alternatives is unlimited.

Even though it is stated above for the sake of simplicity that data is exchanged and checked by means of signalling messages in connection with the registration, the exchange of data is not restricted to these arrangements in any way. Data can be exchanged for example by setting up a conventional data connection (circuit switched or packet switched), and by using a protocol designed for data exchange over the connection.

Even though the invention is described above in connection with a mobile system; it is not restricted in any way to such systems, but it can also be applied to other wireless telecommunication systems and to fixed data transmission systems. For example a set-top box in a satellite, digital or cable television can comprise the functionality according to the invention. The user can be identified on the basis of a password or a smart card. The invention is also particularly applicable to a fixed intranet, where all the software used by a user and the correct settings thereof can be automatically loaded into a terminal of the network (such as a PC or a workstation) upon registration by the user.

It is evident for those skilled in the art that as the technology develops the basic idea of the invention can be implemented in several different manners. Therefore the invention and the embodiments thereof are not restricted to the examples described above, but they may vary within the scope of the claims.

## Claims

1. A method of activating a procedure for loading a service component that is missing from a mobile terminal, **characterized in that** the method comprises :
comparing service components on a first list indicating the service components provided in the mobile terminal and on a second list indicating the service components required in the mobile terminal, the second list being based on data about services a subscriber using the terminal has subscribed to; and
activating a procedure for loading a service component if a service component provided on the second list cannot be found on the first list.

2. A method according to claim 1, **characterized in that** the method also comprises:
using at least two different loading manners in the loading procedure;
indicating the alternative loading manners to the user of the mobile terminal in response to the missing service component; and
loading the missing service component according to the loading manner selected by the user.

3. A method according to claim 2, **characterized in that** the method also comprises:
determining one or more conditions; and
selecting by means of said conditions the loading manners to be indicated.

4. A method according to claim 1, **characterized by** loading the missing service component substantially immediately.

5. A method according to claim 1, **characterized in that** the method also comprises:
using at least two different loading manners in the loading procedure; and
determining one or more conditions according to which the loading manner to be used is selected.

6. A method according to claim 5, **characterized in that** the method also comprises:
setting as the first condition that the missing service component is related to an essential service of the user; and
loading the missing service component substantially immediately if the first condition is fulfilled.

7. A method according to any one of the preceding claims, **characterized by** carrying out a comparison in response to a change in the state of the mobile terminal.

8. A telecommunication system (UMTS) comprising network elements and mobile terminals (MT) for transmitting services to a subscriber, in which system the subscriber can change the mobile terminal he is using, at least one of the services comprising one or more service components required in the mobile terminal used by the subscriber to provide a service,
**characterized in that**
the system (UMTS) is arranged to compare the service components provided in the mobile terminal (MT) with the service components required in the terminal (MT), the service components required in the terminal being based on data about services a subscriber using the terminal has subscribed to, and in response to an absence of a required service component, to activate a procedure for loading the component.

9. A telecommunication system according to claim 8, **characterized in that** the system (UMTS) is arranged to search the service components required in the mobile terminal (MT) from the data of the subscriber using the terminal.

10. A telecommunication system according to claim 8 or 9, **characterized in that** the system (UMTS) is arranged to load a missing service component at least in two different manners and to indicate the alternative loading manners to the subscriber using the mobile terminal.

11. A telecommunication system according to claim 8 or 9, **characterized in that** the system (UMTS) is arranged to load a missing serving component at least in two different manners and to select the loading manner to be used according to at least one predetermined condition.

12. A telecommunication system according to claim 8, 9, 10 or 11, **characterized in that** the loading procedure comprises at least one loading condition, the fulfilment of which triggers the loading of the missing service component, and the system (UMTS) is arranged to detect the fulfilment of the loading condition.

13. A telecommunication system according to any one of claims 8 to 12, **characterized in that** the system (UMTS) is arranged to communicate with another system, preferably the Internet (ON), via which the system is arranged to load the missing service component.

14. A telecommunication system according to any one of claims 8 to 13, **characterized in that** the system (UMTS) is arranged to compare a first time stamp indicating the moment of comparison of the service components provided in the mobile terminal and the components required in the mobile terminal with a second time stamp indicating the moment when the latest version of the service component was updated, and if the first time stamp is earlier than the second time stamp, the system is arranged to activate a comparison of the service components.

15. A telecommunication system according to any one of claims 8 to 13, **characterized in that** the system (UMTS) is arranged to detect a change in the state of the mobile terminal, and in response to such a change, to activate a comparison of the service components.

16. A network element (MEXE-S), arranged to have access to subscriber data of a communication system,
**characterized in that**
the network element (MEXE-S) is arranged to receive from a mobile terminal a first piece of information indicating to the element service components provided in the mobile terminal, to retrieve service components required in the mobile terminal to provide a service from the data of a subscriber using the terminal, to compare the service components provided in the mobile terminal with the components required in the terminal, and to activate the loading procedure of the service component in response to an absence of a service component from the mobile terminal.

17. A network element according to claim 16, **characterized in that** it (MEXE-S) is arranged to receive from the mobile terminal a list of the service components provided in the mobile terminal as the first piece of information.

18. A network element according to claim 17, **characterized in that** it (MEXE-S) is arranged to receive from the mobile terminal an identifier of the terminal as the first piece of information, the network element searching for the service components provided in the mobile terminal by means of said identifier.

19. A network element according to claim 16, 17 or 18, **characterized in that** it (MEXE-S) is arranged to form a list of the service components missing from the mobile terminal on the basis of the comparison, and to activate a procedure for loading the service component by transmitting the list to the mobile terminal.

20. A mobile terminal (MT) for transmitting a service to a subscriber in a telecommunication system where a subscriber can change the mobile terminal he is using, the service comprising one or more service components required in the mobile terminal used by the subscriber to provide the service a subscriber using the terminal has subscribed to
**characterized in that**
the mobile terminal (MT) is arranged to form a first list indicating the service components provided in the mobile terminal, and to load the service components missing from the mobile terminal according to a predetermined loading procedure.

21. A mobile terminal according to claim 20, **characterized in that** the mobile terminal (MT) is arranged to transmit the first list to the telecommunication system network (UMTS) and to receive from the network a second list indicating the service components missing from the mobile terminal.

22. A mobile terminal according to claim 20, **characterized in that** it (MT) is arranged to retrieve the service components required in the mobile terminal from a unit (USIM) which is installed in the mobile terminal and identifies the subscriber, and to compare said components with the service components on the first list, and in response to an absence of a service component from the first list, to activate a procedure for loading the service component.

23. A mobile terminal according to claim 20, **characterized in that** it (MT) is arranged to request from the network a second list indicating the service components required in the mobile terminal, to receive the second list, to compare the service components on the first and the second list, and in response to a service component that is on the second list but not on the first list, to activate a procedure for loading the service components.

24. A mobile terminal according to claim 20, 21, 22 or 23, **characterized in that** it (MT) is arranged to detect a change in the state of the mobile terminal, and to form a first list in response to said change of state.

## Patentansprüche

1. Verfahren zum Aktivieren einer Prozedur zum Laden einer Dienstkomponente, die auf einem mobilen Endgerät fehlt, **dadurch gekennzeichnet, dass** das Verfahren umfasst:
Vergleichen von Dienstkomponenten auf einer ersten Liste, welche die im mobilen Endgerät bereitgestellten Dienstkomponenten angibt, und auf einer zweiten Liste, welche die im mobilen Endgerät benötigten Dienstkomponenten angibt, wobei die zweite Liste auf Daten über Dienste basiert, die ein das Endgerät benutzender Teilnehmer abonniert hat; und
Aktivieren einer Prozedur zum Laden einer Dienstkomponente, falls eine auf der zweiten Liste bereitgestellte Dienstkomponente nicht auf der ersten Liste gefunden werden kann.

2. Verfahren gemäß Anspruch 1, **dadurch gekennzeichnet, dass** das Verfahren auch umfasst:
Benutzen wenigstens zweier verschiedener Ladearten in der Ladeprozedur;
Angeben der alternativen Ladearten dem Benutzer des mobilen Endgeräts in Reaktion auf die fehlende Dienstkomponente; und
Laden der fehlenden Dienstkomponente gemäß der vom Benutzer ausgewählten Ladeart.

3. Verfahren gemäß Anspruch 2, **dadurch gekennzeichnet, dass** das Verfahren auch umfasst:
Bestimmen einer oder mehrerer Bedingungen; und
Auswählen der anzugebenden Ladearten mittels der Bedingungen.

4. Verfahren gemäß Anspruch 1, **gekennzeichnet durch** im Wesentlichen sofortiges Laden der fehlenden Dienstkomponente.

5. Verfahren gemäß Anspruch 1, **dadurch gekennzeichnet, dass** das Verfahren auch umfasst:
Benutzen wenigstens zweier verschiedener Ladearten in der Ladeprozedur; und
Bestimmen einer oder mehrerer Bedingungen gemäß der die zu benutzende Ladeart ausgewählt wird.

6. Verfahren gemäß Anspruch 5, **dadurch gekennzeichnet, dass** das Verfahren auch umfasst:
Festsetzen als die erste Bedingung, dass die fehlende Dienstkomponente sich auf einen wesentlichen Dienst des Benutzers bezieht; und
Laden der fehlenden Dienstkomponente im Wesentlichen sofort, falls die erste Bedingung erfüllt ist.

7. Verfahren gemäß einem der vorhergehenden Ansprüche, **gekennzeichnet durch** Ausführen eines Vergleichs in Reaktion auf einen Wechsel des Zustands des mobilen Endgeräts.

8. Telekommunikationssystem (UMTS), umfassend Netzelemente und mobile Endgeräte (MT) zum Übermitteln von Diensten an einen Abonnenten, wobei im System der Abonnent das mobile Endgerät, das er verwendet, wechseln kann, und wobei wenigstens einer der Dienste eine oder mehrere, im mobilen, vom Abonnenten benutzen Endgerät benötigte Dienstkomponenten umfasst, um einen Dienst bereitzustellen,
**dadurch gekennzeichnet, dass**
das System (UMTS) eingerichtet ist, die im mobilen Endgerät (MT) bereitgestellten Dienstkomponenten mit den im Endgerät (MT) benötigten Dienstkomponenten zu vergleichen, die auf Daten über Dienste basieren, die ein das Endgerät benutzender Abonnent abonniert hat, und in Reaktion auf ein Fehlen einer benötigten Dienstkomponente, eine Prozedur zum Laden der Komponente zu aktivieren.

9. Telekommunikationssystem gemäß Anspruch 8, **dadurch gekennzeichnet, dass** das System (UMTS) eingerichtet ist, die im mobilen Endgerät (MT) benötigten Dienstkomponenten aus den Daten des das Endgerät benutzenden Abonnenten zu suchen.

10. Telekommunikationssystem gemäß Anspruch 8 oder 9, **dadurch gekennzeichnet, dass** das System (UMTS) eingerichtet ist, eine fehlende Dienstkomponente auf wenigstens zwei verschiedene Arten zu laden und die alternativen Ladearten dem das mobile Endgerät benutzenden Abonnenten anzugeben.

11. Telekommunikationssystem gemäß Anspruch 8 oder 9, **dadurch gekennzeichnet, dass** das System (UMTS) eingerichtet ist, eine fehlende Dienstkomponente auf wenigstens zwei verschiedene Arten zu laden und die zu benutzende Ladeart gemäß wenigstens einer vorbestimmten Bedingung auszuwählen.

12. Telekommunikationssystem gemäß Anspruch 8, 9, 10 oder 11, **dadurch gekennzeichnet, dass** die Ladeprozedur wenigstens eine Ladebedingung umfasst, deren Erfüllung das Laden der fehlenden Dienstkomponente anstößt, und das System (UMTS) eingerichtet ist, die Erfüllung der Ladebedingung zu detektieren.

13. Telekommunikationssystem gemäß einem der Ansprüche 8 bis 12, **dadurch gekennzeichnet, dass** das System (UMTS) eingerichtet ist, mit einem anderen System, vorzugsweise dem Internet (ON), zu kommunizieren, über welches das System eingerichtet ist, die fehlende Dienstkomponente zu laden.

14. Telekommunikationssystem gemäß einem der Ansprüche 8 bis 13, **dadurch gekennzeichnet, dass** das System (UMTS) eingerichtet ist, einen ersten Zeitstempel, der den Moment des Vergleichs der im mobilen Endgerät bereitgestellten Dienstkomponenten und der im mobilen Endgerät benötigten Komponenten angibt, mit einem zweiten Zeitstempel, der den Moment angibt, wenn die späteste Version der Dienstkomponente aktualisiert wurde, zu vergleichen, und falls der erste Zeitstempel früher als der zweite Zeitstempel ist, ist das System eingerichtet, einen Vergleich der Dienstkomponenten zu aktivieren.

15. Telekommunikationssystem gemäß einem der Ansprüche 8 bis 13, **dadurch gekennzeichnet, dass** das System (UMTS) eingerichtet ist, eine Änderung des Zustands des mobilen Endgeräts zu detektieren, und in Reaktion auf eine derartige Änderung, einen Vergleich der Dienstkomponenten zu aktivieren.

16. Netzelement (MEXE-S), das eingerichtet ist, um Zugriff auf Abonnentendaten eines Kommunikationssystems zu haben,
**dadurch gekennzeichnet, dass**
das Netzelement (MEXE-S) eingerichtet ist, aus einem mobilen Endgerät ein erstes Informationsstück zu empfangen, das dem Element im mobilen Endgerät bereitgestellte Dienstkomponenten angibt, im mobilen Endgerät benötigte Dienstkomponenten abzurufen, um einen Dienst aus den Daten eines das Endgerät benutzenden Benutzers bereitzustellen, die im mobilen Endgerät bereitgestellten Dienstkomponenten mit den im Endgerät benötigten Komponenten zu vergleichen, und die Ladeprozedur der Dienstkomponente in Reaktion auf ein Fehlen einer Dienstkomponente aus dem mobilen Endgerät zu aktivieren.

17. Netzelement gemäß Anspruch 16, **dadurch gekennzeichnet, dass** es (MEXE-S) eingerichtet ist, vom mobilen Endgerät eine Liste der im mobilen Endgerät bereitgestellten Dienstkomponenten als das erste Informationsstück zu empfangen.

18. Netzelement gemäß Anspruch 17, **dadurch gekennzeichnet, dass** es (MEXE-S) eingerichtet ist, vom mobilen Endgerät einen Bezeichner des Endgeräts als das erste Informationsstück zu empfangen, wobei das Netzelement mittels des Bezeichners nach den im mobilen Endgerät bereitgestellten Dienstkomponenten sucht.

19. Netzelement gemäß Anspruch 16, 17 oder 18, **dadurch gekennzeichnet, dass** es (MEXE-S) eingerichtet ist, eine Liste der auf dem mobilen Endgerät fehlenden Dienstkomponenten auf der Grundlage des Vergleichs zu bilden, und eine Prozedur zum Laden der Dienstkomponente durch Übermitteln der Liste an das mobile Endgerät zu aktivieren.

20. Mobiles Endgerät (MT) zum Übermitteln eines Dienstes an einen Abonnenten in einem Telekommunikationssystem, in welchem ein Abonnent das mobile Endgerät, das er benutzt, wechseln kann, wobei der Dienst eine oder mehrere im mobilen, vom Abonnenten benutzten Endgerät benötigte Dienstkomponenten umfasst, um den Dienst bereitzustellen, den ein das Endgerät benutzender Abonnent abonniert hat,
**dadurch gekennzeichnet, dass**
das mobile Endgerät (MT) eingerichtet ist, eine erste Liste zu bilden, welche die im mobilen Endgerät bereitgestellten Dienstkomponenten angibt, und die auf dem mobilen Endgerät fehlenden Dienstkomponenten gemäß einer vorbestimmten Ladeprozedur zu laden.

21. Mobiles Endgerät gemäß Anspruch 20, **dadurch gekennzeichnet, dass** das mobile Endgerät (MT) eingerichtet ist, die erste Liste an das Telekommunikationssystemnetz (UMTS) zu übermitteln und vom Netzwerk eine zweite Liste zu empfangen, welche die Dienstkomponenten angibt, die auf dem mobilen Endgerät fehlen.

22. Mobiles Endgerät gemäß Anspruch 20, **dadurch gekennzeichnet, dass** es (MT) eingerichtet ist, die im mobilen Endgerät benötigten Dienstkompanenten aus einer Einheit (USIM) abzurufen, die im mobilen Endgerät installiert ist und den Abonnenten identifiziert, und die Komponenten mit den Dienstkomponenten auf der ersten Liste zu vergleichen, und in Reaktion auf ein Fehlen einer Dienstkomponente aus der ersten Liste, eine Prozedur zum Laden der Dienstkomponente zu aktivieren.

23. Mobiles Endgerät gemäß Anspruch 20, **dadurch gekennzeichnet, dass** es (MT) eingerichtet ist, aus dem Netz eine zweite Liste anzufordern, welche die im mobilen Endgerät benötigten Dienstkomponenten angibt, die zweite Liste zu empfangen, die Dienstkomponenten auf der ersten und zweiten Liste zu vergleichen, und in Reaktion auf eine Dienstkomponente, die auf der zweiten Liste aber nicht auf der ersten Liste ist, eine Prozedur zum Laden der Dienstkomponenten zu aktivieren.

24. Mobiles Endgerät gemäß Anspruch 20, 21, 22 oder 23, **dadurch gekennzeichnet, dass** es (MT) eingerichtet ist, eine Änderung des Zustands des mobilen Endgeräts zu detektieren und eine erste Liste in Reaktion auf den Zustandswechsel zu bilden.

## Revendications

1. Procédé d'activation d'une procédure pour charger un composant de service qui est manquant dans un terminal mobile, **caractérisé en ce que** le procédé comprend les étapes consistant à :
comparer des composants de service sur une première liste indiquant les composants de service fournis dans le terminal mobile et sur une seconde liste indiquant les composants de service requis dans le terminal mobile, la seconde liste étant basée sur des données relatives aux services qu'un abonné utilisant le terminal a souscrits ; et
activer une procédure pour charger un composant de service si un composant de service fourni sur la seconde liste ne peut pas être trouvé sur la première liste.

2. Procédé selon la revendication 1, **caractérisé en ce que** le procédé comprend également les étapes consistant à :
utiliser au moins deux manières de chargement différentes dans la procédure de chargement ;
indiquer les manières de chargement alternatives à l'utilisateur du terminal mobile en réponse au composant de service manquant ; et
charger le composant de service manquant selon la manière de chargement sélectionnée par l'utilisateur.

3. Procédé selon la revendication 2, **caractérisé en ce que** le procédé comprend également les étapes consistant à :
déterminer une ou plusieurs conditions ; et
sélectionner au moyen desdites conditions les manières de chargement à indiquer.

4. Procédé selon la revendication 1, **caractérisé par** l'étape consistant à charger sensiblement immédiatement le composant de service manquant.

5. Procédé selon la revendication 1, **caractérisé en ce que** le procédé comprend également les étapes consistant à :
utiliser au moins deux manières différentes de chargement dans la procédure de chargement; et
déterminer une ou plusieurs conditions selon lesquelles la manière de chargement à utiliser est sélectionnée.

6. Procédé selon la revendication 5, **caractérisé en ce que** le procédé comprend également les étapes consistant à :
régler en tant que première condition que le composant de service manquant est lié à un service essentiel de l'utilisateur ; et
charger le composant de service manquant sensiblement immédiatement si la première condition est remplie.

7. Procédé selon l'une quelconque des revendications précédentes, **caractérisé par** l'étape consistant à effectuer une comparaison en réponse à un changement de l'état du terminal mobile.

8. Système de télécommunications (UMTS) comprenant des éléments de réseau et des tenninaux mobiles (MT) pour transmettre des services à un abonné, dans lequel l'abonné peut changer de tenninal mobile qu'il utilise, au moins un des services comprenant un ou plusieurs composants de service requis dans le terminal mobile utilisé par l'abonné pour fournir un service,
**caractérisé en ce que**
le système (UMTS) est agencé pour comparer les composants de service fournis dans le terminal mobile (MT) aux composants de service requis dans le terminal (MT), les composants de service requis dans le terminal étant basés sur des données relatives à des services qu'un abonné utilisant le terminal a souscrits, et en réponse à une absence d'un composant de service requis, pour activer une procédure pour charger le composant.

9. Système de télécommunications selon la revendication 8, **caractérisé en ce que** le système (UMTS) est agencé pour chercher les composants de service requis dans le terminal mobile (MT) à partir des données de l'abonné utilisant le terminal.

10. Système de télécommunications selon la revendication 8 ou 9, **caractérisé en ce que** le système (UMTS) est agencé pour charger un composant de service manquant au moins de deux manières différentes et pour indiquer les manières de chargement alternatives à l'abonné utilisant le terminal mobile.

11. Système de télécommunications selon la revendication 8 ou 9, **caractérisé en ce que** le système (UMTS) est agencé pour charger un composant de service manquant au moins de deux manières différentes et pour sélectionner la manière de chargement à utiliser selon au moins une condition prédéterminée.

12. Système de télécommunications selon la revendication 8, 9, 10 ou 11, **caractérisé en ce que** la procédure de chargement comprend au moins une condition de chargement dont l'exécution déclenche le chargement du composant de service manquant, et le système (UMTS) est agencé pour détecter l'exécution de la condition de chargement.

13. Système de télécommunications selon l'une quelconque des revendications 8 à 12, **caractérisé en ce que** le système (UMTS) est agencé pour communiquer avec un autre système, de préférence l'Internet (ON), par l'intermédiaire duquel le système est agencé pour charger le composant de service manquant.

14. Système de télécommunications selon l'une quelconque des revendications 8 à 13, **caractérisé en ce que** le système (UMTS) est agencé pour comparer un premier horodatage indiquant le moment de comparaison des composants de service fournis dans le terminal mobile et des composants requis dans le terminal mobile à un second horodatage indiquant le moment auquel la version la plus récente du composant de service a été mise à jour, et si le premier horodatage est antérieur au second horodatage, le système est agencé pour activer une comparaison des composants de service.

15. Système de télécommunications selon l'une quelconque des revendications 8 à 13, **caractérisé en ce que** le système (UMTS) est agencé pour détecter un changement de l'état du terminal mobile, et en réponse à un tel changement, activer une comparaison des composants de service.

16. Elément de réseau (MEXE-S), agencé pour avoir accès à des données d'abonnés d'un système de communication,
**caractérisé en ce que**
l'élément de réseau (MEXE-S) est agencé pour recevoir d'un terminal mobile une première information indiquant à l'élément des composants de service fournis dans le terminal mobile, extraire des composants de service requis dans le terminal mobile pour fournir un service à partir des données d'un abonné utilisant le terminal, comparer les composants de service fournis dans le terminal mobile aux composants requis dans le terminal, et activer la procédure de chargement du composant de service en réponse à une absence d'un composant de service dans le terminal mobile.

17. Elément de réseau selon la revendication 16, **caractérisé en ce qu'**il (MEXE-S) est agencé pour recevoir du terminal mobile une liste des composants de service fournis dans le terminal mobile en tant que première information.

18. Elément de réseau selon la revendication 17, **caractérisé en ce qu'**il (MEXE-S) est agencé pour recevoir du terminal mobile un identifiant du terminal en tant que première information, l'élément de réseau cherchant les composants de service fournis dans le terminal mobile au moyen dudit identifiant.

19. Elément de réseau selon la revendication 16, 17 ou 18, **caractérisé en ce qu'**il (MEXE-S) est agencé pour former une liste de composants de service manquant dans le terminal mobile sur la base de la comparaison, et activer une procédure pour charger le composant de service en transmettant la liste au terminal mobile.

20. Terminal mobile (MT) pour transmettre un service à un abonné dans un système de télécommunications où un abonné peut changer le terminal mobile qu'il utilise, le service comprenant un ou plusieurs composants de service requis dans le terminal mobile utilisé par l'abonné pour fournir le service qu'un abonné utilisant le terminal a souscrit,
**caractérisé en ce que**
le terminal mobile (MT) est agencé pour former une première liste indiquant les composants de service fournis dans le terminal mobile, et charger les composants de service manquant dans le terminal mobile selon une procédure de chargement prédéterminée.

21. Terminal mobile selon la revendication 20, **caractérisé en ce que** le terminal mobile (MT) est agencé pour transmettre la première liste au réseau de système de télécommunications (UMTS) et recevoir du réseau une seconde liste indiquant les composants de service manquant dans le terminal mobile.

22. Terminal mobile selon la revendication 20, **caractérisé en ce qu'**il (MT) est agencé pour extraire les composants de service requis dans le terminal mobile à partir d'une unité (USIM) qui est installée dans le terminal mobile et identifie l'abonné, et comparer lesdits composants aux composants de service sur la première liste, et en réponse à une absence d'un composant de service de la première liste, activer une procédure pour charger le composant de service.

23. Terminal mobile selon la revendication 20, **caractérisé en ce qu'**il (MT) est agencé pour demander au réseau une seconde liste indiquant les composants de service requis dans le terminal mobile, recevoir la seconde liste, comparer les composants de service sur la première liste et sur la seconde liste, et en réponse à un composant de service qui se trouve sur la seconde liste mais pas sur la première liste, activer une procédure pour charger les composants de service.

24. Terminal mobile selon la revendication 20, 21, 22 ou 23, **caractérisé en ce qu'**il (MT) est agencé pour détecter un changement de l'état du terminal mobile, et former une première liste en réponse au dit changement d'état.
